# DEMANDE DE BREVET EUROPEEN

(11) **EP 1 158 381 A2**
(43) Date de publication de la demande: **28.11.2001**
(21) Numéro de dépôt: 01112449.2
(22) Date de dépôt: 22.05.2001
(51) Int. Cl.: G05D 23/19, F24H 9/20

(54) **Procédé pour l'adaptation de la période de prélèvement d'énergie électrique sur le réseau de distribution par des appareils électriques pour le réchauffement à accumulation, en particulier des chauffe-eau, et dispositif électronique pour l'application du dit procédé**

(30) Priorité: 24.05.2000 BE 200000346
(71) Demandeur: MTS Technical S.A., 5020 Malonne (BE)
(72) Inventeur: Xhonneux, Alain, 5020 Malonne (BE); Geuten, Francis, 5020 Malonne (BE)
(74) Mandataire: Guareschi, Antonella

(57) **Abrégé**

L'invention entre dans le domaine des procédés et des dispositifs correspondants pour l'obtention d'une adaptation automatique de la période de prélèvement d'énergie électrique, durant les périodes de moindre coût de cette dernière, de la part d'appareils électriques de réchauffement à accumulation, en particulier de la part des chauffe-eau. Une logique électronique intelligente et dotée de mémoire, assemblée sur une carte électronique, permet au procédé de s'adapter automatiquement aux différentes périodes de distribution, variables d'un Pays à l'autre aussi bien par le nombre que par le positionnement sur les 24 heures, et de situer, de la manière la plus avantageuse, le prélèvement d'énergie électrique à partir du réseau à l'intérieur de la période de faible coût de cette dernière.

## Description

### DESCRIPTION DE L'INVENTION

L'objet de la présente invention est un procédé ainsi que le dispositif électronique correspondant pour l'adaptation de la période de prélèvement d'énergie électrique à partir du réseau de distribution pour des appareils électriques de réchauffement à accumulation, en particulier pour les chauffe-eau.

Depuis longtemps, dans les Pays où la consommation d'énergie est particulièrement importante, on applique à cette énergie un tarif différent en fonction de la période de la journée où elle est prélevée par l'utilisateur.

Cette différenciation tarifaire particulière a pour but d'encourager le prélèvement d'énergie électrique de nuit, lorsque le coût de cette dernière est plus bas, et de dissuader l'utilisateur d'un prélèvement diurne.

Ce changement des périodes de consommation concerne surtout les sociétés de distribution, car en réduisant le prélèvement diurne, qui est très important car la plupart des activités se déroulent au cours de cette période, il est possible d'augmenter la consommation durant les heures nocturnes, lorsque le prélèvement énergétique est très réduit.

De cette manière, on obtient un équilibre du prélèvement énergétique au cours des vingt-quatre heures, ce qui aide remarquablement le secteur de production d'énergie électrique, surtout quand il est fortement basé sur des centrales nucléaires: en effet, ces centrales présentent une souplesse pratiquement nulle, ce qui oblige le producteur d'énergie électrique à activer des centrales thermiques pour affronter les pics de demande d'énergie.

Face à cette politique de distribution et de tarification de l'énergie électrique au cours de la journée, chez les utilisateurs s'est développé un vis intérêt pour les appareils électriques de réchauffement à accumulation, en particulier pour le réchauffement de l'eau sanitaire, surtout dans des pays comme la Belgique, la France, l'Allemagne et la Suisse.

La plupart des appareils susmentionnés fonctionne sur le principe de l'alimentation durant la période de faible coût de l'énergie électrique et est pilotée par un thermostat qui détermine le besoin de réchauffement dû à la consommation d'énergie durant la période de coût élevé de l'énergie, c'est à dire principalement durant la période diurne.

L'alimentation en énergie de ces appareils est possible uniquement au cours de la période est disponible de l'énergie électrique à faible coût, c'est à dire durant les heures nocturnes.

La réalité qu'on vient de décrire a créé toutefois un problème important pour les organismes de production d'électricité: en effet, on relève que, pour une région géographique donnée, la demande en énergie électrique pour alimenter les appareils décrits ci-dessus, durant la période citée de faible coût de l'énergie même, a lieu pratiquement au même moment. C'est ainsi que se crée un pic de la demande particulièrement élevé, qui peut être quantifié de l'ordre de 15/20% minimum de la consommation au moment du début de la demande d'énergie de la part des utilisateurs.

En définitive, le problème cité est constitué par le fait qu'à l'intérieur de la période de faible coût de la fourniture d'énergie électrique il existe aussi bien une période initiale, caractérisée par un pic de la demande, qu'un moment final, caractérisé par une demande minimale d'énergie; il est donc évident que pour les sociétés de production d'énergie électrique, se pose à nouveau le problème de savoir comment résoudre la non flexibilité d'une grande partie des installations, en présence de pics de demande d'énergie, même s'ils se situent à l'intérieur de la période citée de faible coût.

Actuellement les solutions à ce problème sont réellement peu nombreuses, étant donné que le problème même se pose pour les producteurs d'électricité, alors que la solution devrait émaner, de manière réaliste, des sociétés de construction d'appareils électriques à accumulation.

A l'heure actuelle, les seules solutions appliquées se limitent à peu de produits constitués par les radiateurs électriques à accumulation, qui sont conçus pour réaliser le déplacement le moment de la recharge au terme de la période de faible coût de l'énergie électrique.

Dans le domaine des chauffe-eau, il n'existe aucune solution spécifique.

Le but de la présente invention est de réaliser un procédé d'adaptation de la période de prélèvement d'énergie électrique à partir du réseau de distribution pour les appareils électriques de réchauffement à accumulation, et en particulier les chauffe-eau, ce procédé étant basé sur une carte électronique dotée d'un microprocesseur à logique intelligente du type dit "fuzzy logic".

En particulier, le procédé qui forme l'objet de la présente invention se caractérise par le fait qu'il est constitué par la succession des interventions opérationnelles suivantes:
- une détermination automatique, au cours des vingt-quatre heures qui composent la journée, de la présence de périodes, ou de cycles, durant lesquels l'énergie électrique est distribuée à faible coût à partir du réseau;
- une détermination du gradient de température d'un appareil électrique de réchauffement à accumulation, en particulier d'un chauffe-eau; dans le cas spécifique d'un chauffe-eau, le dit gradient de température étant le temps nécessaire à ce dernier pour augmenter de 1°C la température de l'eau qui y est contenue;
- un transfert temporel, de la période de prélèvement de l'énergie électrique à partir du réseau de la part de l'appareil électrique de réchauffement à accumulation, en particulier le chauffe-eau; le dit transfert étant apte à faire débuter le prélèvement de l'énergie électrique à un moment opportun, automatiquement placé à l'intérieur de la période citée de faible coût de l'énergie même.

Cette caractéristique et d'autres sont mieux mises en évidence grâce à la description suivante faite en référence à une forme de réalisation préférée illustrée uniquement à titre d'exemple non limitatif par les tables de dessin ci-jointes, sur lesquelles:

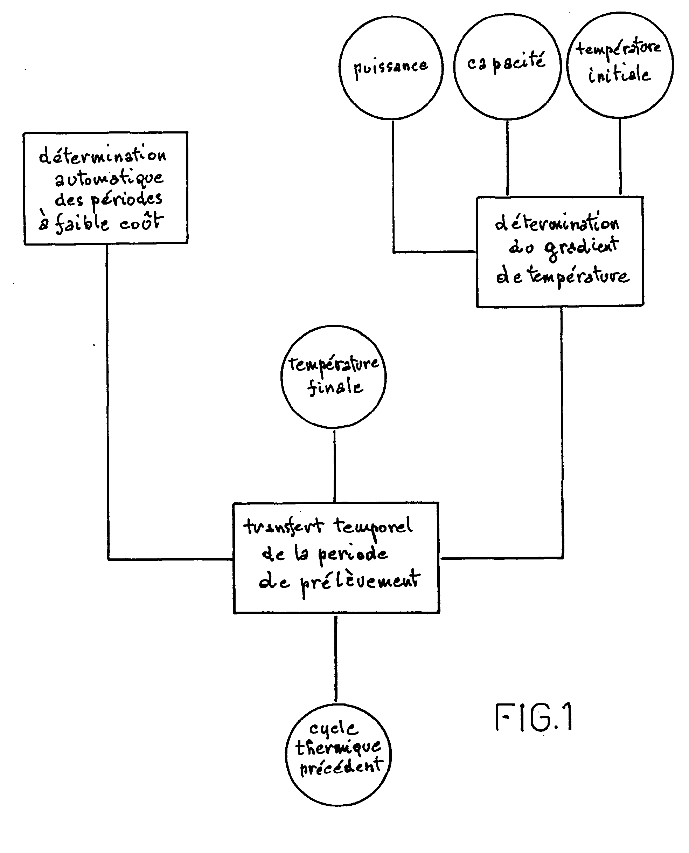

- la figure 1 illustre un schéma fonctionnel du procédé;
- la figure 2 illustre le tracé de circuitation sur une carte électronique;
- la figure 3 illustre la disposition des principaux éléments opérationnels présents sur un côté de la dite carte électronique;
- la figure 4 illustre la disposition d'autres éléments opérationnels présents sur le côté opposé de la même carte électronique.

A présent on décrit le procédé qui forme l'objet de la présente invention.

Si on suppose se trouver dans un pays où le cycle de distribution d'énergie électrique à faible coût est constitué, par exemple, d'une période de six heures durant la période nocturne et de deux heures durant la période diurne, le procédé qui forme l'objet de la présente invention prévoit la détermination automatique de la période de distribution la plus longue, c'est à dire la période nocturne de six heures.

En effet, c'est précisément pour sa durée plus longue que cette période est la seule qui convient à la recharge d'un appareil électrique de réchauffement à accumulation, en particulier d'un chauffe-eau.

La capacité, inhérente au procédé, de déterminer le gradient de température, c'est à dire, dans le cas spécifique d'un chauffe-eau, le temps nécessaire pour faire augmenter de 1°C la température de l'eau sanitaire contenue par ce dernier, permet au procédé même de déterminer le temps nécessaire pour atteindre la température finale souhaitée par l'utilisateur.

La capacité citée, associée à la possibilité du procédé même de connaître la dite température finale souhaitée, rend possible la détermination du moment le plus opportun au début du prélèvement de l'énergie électrique à partir du réseau à l'intérieur de la période nocturne de faible coût, de manière à achever la recharge électrique au terme de la période nocturne citée.

Un premier avantage offert par le procédé qui forme l'objet de la présente invention concerne l'utilisateur, en termes d'économies d'énergie; en effet, étant donné que les dispersions thermiques sont toujours plus importantes aux températures les plus élevées, en déplaçant la recharge énergétique au terme de la période à faible coût, la dispersion thermique a lieu au début de cette période lorsque la température à l'intérieur du chauffe-eau est basse.

Une autre avantage, toujours pour l'utilisateur, est constitué par le fait qu'étant donné que le réchauffement se produit au terme de la période à faible coût de l'énergie, l'eau sanitaire que contient le chauffe-eau est à une température plus élevée au moment où l'utilisateur même en a réellement besoin.

Un autre avantage offert par le procédé qui fait l'objet de la présente invention concerne le producteur d'énergie électrique, car, étant donné que le début de la phase de réchauffement de chaque chauffe-eau correspond à des moments différents, on n'est plus en présence d'un pic de demande en correspondance de la période à faible coût de l'énergie même, et, par conséquent, le producteur cité peut gérer au mieux ses installations de production.

Un dispositif électronique pour l'obtention du procédé décrit plus haut est caractérisé par le fait qu'il est constitué par une carte électronique qui comprend, au moins les éléments essentiels suivants:
- un microprocesseur;
- un relais de commande apte à piloter au moins une résistance électrique de l'élément qui réchauffe l'eau sanitaire;
- un potentiomètre apte au réglage de la température de l'eau sanitaire que contient le chauffe-eau; ce relais étant accessible à l'utilisateur;
- une sonde de mesure de la température de l'eau sanitaire; cette carte pouvant comprendre également les éléments supplémentaires suivants et non indispensables au fonctionnement de la carte même:
   - une DEL verte apte à la signalisation du bon fonctionnement du dispositif électronique même et d'une protection efficiente de la chaudière d'un chauffe-eau;
   - une DEL rouge apte à la signalisation des anomalies de fonctionnement;
   - une pluralité de DELs blanches aptes à la signalisation du contenu énergétique d'un chauffe-eau;
   - un transformateur de diminution du courant apte à l'alimentation du dispositif électronique et apte également à fournir un courant de protection de la chaudière du chauffe-eau;
   - une deuxième sonde de mesure de la température;
   - un connecteur rapide apte à la connexion des sondes de mesure de la température;
   - un connecteur rapide apte à la connexion d'une batterie de chargement des piles;
   - un connecteur rapide apte à la connexion de l'anode et de la chaudière pour la transmission de la signalisation de l'état du fonctionnement du dispositif de protection cathodique de la chaudière même;
   - un bouton de remise à l'état initial, le dit bouton permettant à un installateur d'activer la procédure d'auto-diagnostic.

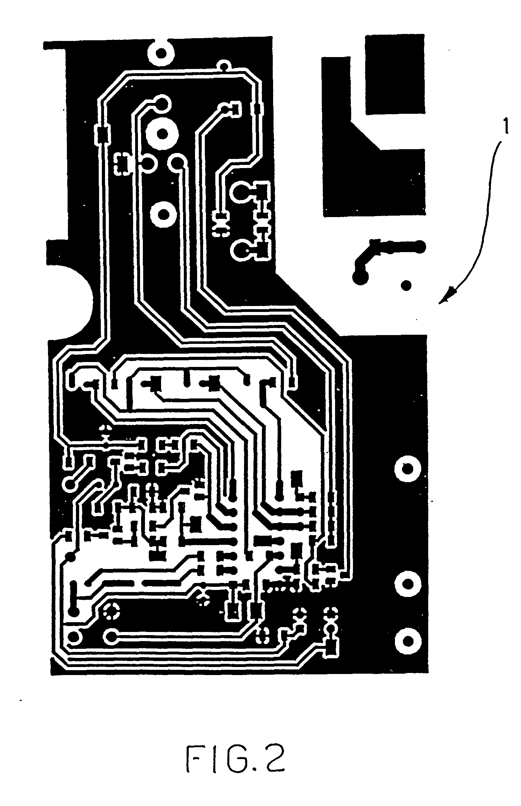

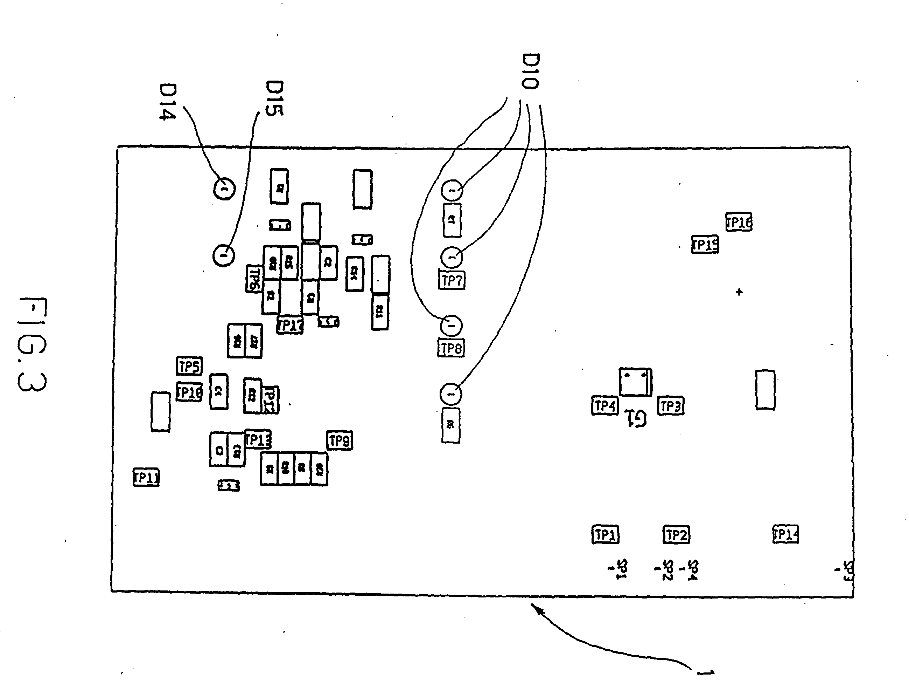

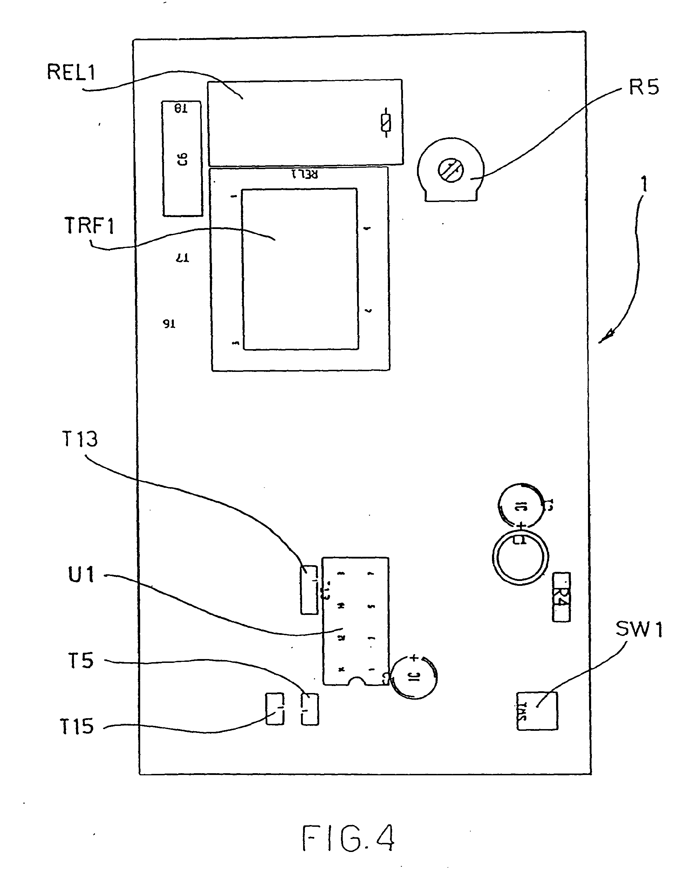

En décrivant le dispositif illustré dans les figures 2, 3, et 4, par 1 on a indiqué une carte électronique.

D14 et D15 sont deux DELS, respectivement verte et rouge, indicatives de l'état de fonctionnement du dispositif même.

Quatre DELs de couleur blanche D10 indiquent le contenu énergétique du chauffe-eau.

Un transformateur TRF1 est apte aussi bien à alimenter la carte électronique 1 qu'à garantir la protection anticorrosion de type anodique de la chaudière du chauffe-eau dont l'élément chauffant, constitué d'au moins une résistance électrique, est piloté par un relais de commande REL1.

Un potentiomètre R5 permet la programmation de la température finale de l'eau contenue dans le chauffe-eau; cette programmation est accessible à l'utilisateur.

Un microprocesseur U1 constitue l'intelligence dotée de mémoire du présent dispositif et contient la totalité du logiciel de pilotage du dispositif même.

Une série de connecteurs rapides T13, T15 et T5 permet la connexion de la carte 1, respectivement, à deux sondes de mesure de la température, à une batterie de chargement des piles d'un type connu, à l'anode et à la chaudière du chauffe-eau.

On fait remarquer que la carte 1 pourrait également ne contenir que l'ensemble constitué par le microprocesseur U1, par le relais REL1, par le potentiomètre R5 et par au moins une sonde de température; le dit ensemble simplifié est tout de même en mesure de rendre opérationnel le procédé pour l'adaptation du prélèvement d'énergie électrique décrit précédemment.

A présent on décrit le fonctionnement du dispositif électronique qui forme l'objet de la présente invention, en suivant les références indiquées dans les figures 2, 3 et 4.

Lorsque le chauffe-eau est en fonction, l'allumage continu de la DEL verte D14 signale un fonctionnement sans anomalies, par exemple aussi bien de la carte électronique 1 que de la protection anticorrosion efficace de la chaudière qui contient l'eau sanitaire à chauffer.

Au cas où une anomalie de fonctionnement d'une nature quelconque se manifesterait, la DEL rouge D15 normalement éteinte s'allumerait.

Les deux DELs citées peuvent également fonctionner en clignotant; ce fait indiquerait deux types de problèmes différents; dans ce cas, la fréquence de l'intermittence du clignotement sera différente suivant la nature du problème qui s'est présenté.

Il faut remarquer que le fonctionnement à intermittence cité des deux DELs D14 et D15 ne se produit que si on appuie sur la touche de remise à l'état initial SW1.

L'utilisateur peut intervenir personnellement pour la programmation de la température maximale souhaitée de l'eau sanitaire, et il effectue la dite intervention par l'intermédiaire du réglage du potentiomètre R5.

La dite intervention de l'utilisateur est la seule disponible pour ce dernier, car tout le fonctionnement du dispositif électronique qui forme l'objet de la présente invention est géré automatiquement par le microprocesseur U1.

Chaque jour de fonctionnement du chauffe-eau, la mémoire dont est doté le microprocesseur cité permet une comparaison immédiate et automatique avec les données de fonctionnement de la journée précédente.

Durant le réchauffement de l'eau sanitaire contenue dans le chauffe-eau, l'utilisateur peut voir si les valeurs différentes et croissantes du contenu énergétique de l'eau sanitaire, c'est à dire, en définitive, la température atteinte par cette dernière, sont atteintes, grâce à l'allumage des quatre DELs blanches D10 en correspondance des quatre valeurs différentes et croissantes de la valeur du contenu énergétique du chauffe-eau: par exemple, chacune des DELs citées s'allumera au moment où une fraction énergétique correspondant à 25% du total auquel peut parvenir le chauffe-eau est atteinte.

Il faut noter que la facilité de réalisation de tous les câblages de la carte électronique 1 aussi bien vers les sondes de mesure de la température, que vers la batterie de chargement des piles, que de l'anode et de la chaudière du chauffe-eau est assurée par un dispositif anti-erreur approprié.

L'avantage principal du dispositif électronique qui forme l'objet de la présente invention réside dans l'intelligence du microprocesseur adopté, permettant une adaptation souple du procédé décrit aux changements de la politique de distribution de l'énergie électrique en vigueur dans différents Pays.

Un autre avantage est offert par la possibilité de rendre la carte capable de gérer des fonctions supplémentaires en installant simplement un microprocesseur doté de possibilités opérationnelles plus importantes.

A ce propos, au cours de la description, on a uniquement parlé de la fonction d'adaptation de la période de prélèvement d'énergie électrique à partir du réseau, du procédé et du dispositif électronique correspondant, qui forment l'objet de la présente invention, mais la même carte, uniquement par l'intermédiaire d'un microprocesseur plus évolué, pourrait également réaliser, de manière avantageuse, par exemple, un nettoyage antibactérien de l'eau sanitaire que contiennent les chauffe-eau.

## Revendications

1. Un procédé pour l'adaptation de la période de prélèvement d'énergie électrique à partir du réseau de distribution de la part d'appareils électriques de réchauffement à accumulation et en particulier de la part de chauffe-eau, **caractérisé par le fait qu'**il se compose de la succession des interventions opérationnelles suivantes:
une détermination automatique, au cours des vingt-quatre heures journalières, de la présence de périodes, ou de cycles, durant lesquels on a une distribution à partir du réseau d'énergie électrique à faible coût;
une détermination du gradient de température d'un appareil électrique de réchauffement à accumulation, en particulier d'un chauffe-eau; dans le cas spécifique d'un chauffe-eau, ce gradient de température étant le temps nécessaire à ce dernier pour augmenter de 1°C la température de l'eau qui y est contenue;
un transfert temporel de la période de prélèvement de l'énergie électrique à partir du réseau de la part de l'appareil électrique de réchauffement à accumulation, en particulier de la part du chauffe-eau; ce transfert est destiné à faire débuter le prélèvement de l'énergie électrique à un moment opportun, automatiquement placé à l'intérieur de la période de faible coût de l'énergie même.

2. Un procédé selon la revendication 1), **caractérisé par le fait que** la détermination des périodes, ou des cycles, durant lesquels on a une distribution d'énergie électrique à faible coût à partir du réseau, est apte à adapter le prélèvement de l'énergie suivant les modalités de distribution qui peuvent être différentes d'une Nation à l'autre; ces périodes pouvant varier par le nombre et la situation au cours de la journée.

3. Un procédé selon la revendication 1), **caractérisé par le fait que** la détermination du gradient de température se fait en tenant compte automatiquement aussi bien de la puissance et de la capacité et de la température de départ de l'appareil électrique de réchauffement à accumulation, en particulier du chauffe-eau, que de la température finale exigée par l'utilisateur.

4. Un procédé selon les revendications 1) et 3), **caractérisé par le fait que** le transfert temporel de la période de prélèvement d'énergie électrique est automatiquement déterminé en fonction de la détermination de la période à faible coût de l'énergie électrique du réseau, du gradient de température, de la température finale demandée par l'utilisateur et en fonction également du cycle thermique du jour précédent.

5. Un dispositif électronique pour l'adaptation de la période de prélèvement d'énergie électrique à partir du réseau de distribution de la part d'appareils électriques de réchauffement à accumulation, en particulier de la part de chauffe-eau, **caractérisé par le fait qu'**il est constitué par une carte électronique (1) qui comprend, au moins, les éléments essentiels suivants:
un microprocesseur (U1);
un relais de commande (REL1) apte à piloter au moins une résistance électrique de l'élément qui réchauffe l'eau sanitaire;
un potentiomètre (R5) apte au réglage de la température de l'eau sanitaire que contient le chauffe-eau; le dit relais étant accessible à l'utilisateur;
une sonde de mesure de la température de l'eau sanitaire; cette carte pouvant comprendre également les éléments supplémentaires suivants et non indispensables au fonctionnement de la carte même:
une DEL verte (D14) apte à la signalisation du bon fonctionnement du dispositif électronique même et d'une protection efficiente de la chaudière d'un chauffe-eau;
une DEL rouge (D15) apte à la signalisation des anomalies de fonctionnement;
une pluralité de DELs blanches (D10) aptes à la signalisation du contenu énergétique d'un chauffe-eau;
un transformateur de diminution du courant (TRF1) apte à l'alimentation du dispositif électronique et apte également à fournir le courant de protection de la chaudière du chauffe-eau;
une deuxième sonde de mesure de la température;
un connecteur rapide (T13) apte à la connexion des sondes de mesure de la température;
un connecteur rapide (T15) apte à la connexion d'une batterie de chargement des piles;
un connecteur rapide (T5) apte à la connexion de l'anode et de la chaudière pour la transmission de la signalisation de l'état du fonctionnement du dispositif de protection cathodique de la chaudière même;
un bouton de remise à l'état initial (SW1), le dit bouton permettant à un installateur d'activer la procédure d'auto-diagnostic.

6. Un dispositif selon la revendication 5),
**caractérisé par le fait que** la DEL verte D14 est normalement allumée; elle peut également être clignotante dans le but d'indiquer l'existence de deux problèmes techniques différents quand on actionne le bouton de remise à l'état initial (SW1); le rythme de l'intermittence étant dans ce cas différent suivant le problème technique.

7. Un dispositif selon la revendication 5),
**caractérisé par le fait que** la DEL rouge D15 est normalement éteinte; elle peut. également clignoter dans le but d'indiquer l'existence de deux problèmes quand on actionne le bouton de remise à l'état initial (SW1); le rythme de l'intermittence étant dans ce cas différent suivant le problème technique.

8. Un dispositif selon la revendication 5),
**caractérisé par le fait qu'**à chacune des DELs blanches (D10) correspond une valeur de pourcentage bien déterminée du contenu énergétique du chauffe-eau; par exemple, à la première des DELs (D10) peut correspondre une valeur de 25% du maximum jusqu'à arriver à la valeur de 100% signalée par la dernière des DELs (D10) citées.

9. Un dispositif selon la revendication 5),
**caractérisé par le fait que** les relais (REL1) sont au nombre de trois dans le cas d'une utilisation de courant électrique triphasé.

10. Un dispositif selon la revendication 5),
**caractérisé par le fait que** le potentiomètre (R5) est doté d'un moyen approprié apte à forcer le fonctionnement durant une période limitée de vingt-quatre heures en cas de pannes.

11. Un dispositif selon la revendication 5),
**caractérisé par le fait que** le microprocesseur (U1) contient tout le logiciel de pilotage; le dit microprocesseur étant doté d'une mémoire, cette mémoire étant apte à l'enregistrement du cycle énergétique de la journée précédente.

12. Un dispositif selon la revendication 5),
**caractérisé par le fait que** les connecteurs rapides (T13, T15, T5) sont tous dotés de moyens aptes à éviter des erreurs de montage de ces derniers.

13. Un dispositif selon la revendication 5),
**caractérisé par le fait que** ce dernier peut permettre l'exécution simultanée de fonctions opérationnelles supplémentaires comme, par exemple, une fonction thermique antibactérienne, grâce à la présence d'un microprocesseur doté de capacités opérationnelles plus étendues.
